## Europäisches Patentamt

## European Patent Office

## Office européen des brevets

(19)

(11) Numéro de publication: **0 059 131 B1**

(12) **FASCICULE DE BREVET EUROPEEN**

(45) Date de publication du fascicule du brevet:
02.05.85

(51) Int. Cl.⁴: **G 21 C 1/02, F 04 D 7/06, F 16 J 15/16**

(21) Numéro de dépôt: **82400200.0**

(22) Date de dépôt: **05.02.82**

(54) **Elément de liaison entre une pompe primaire et le conduit de refoulement pour surrégénérateur de type piscine.**

(30) Priorité: **09.02.81 FR 8102456**

(43) Date de publication de la demande:
**01.09.82 Bulletin 82/35**

(45) Mention de la délivrance du brevet:
**02.05.85 Bulletin 85/18**

(84) Etats contractants désignés:
**DE FR GB IT**

(56) Documents cités:
**FR - A - 1 471 970**
**FR - A - 2 075 505**
**FR - A - 2 326 011**

**NUCLEONICS, volume 23, no. 2, février 1965 J. WILLIAMS "Shaft-seal systems for large power-reactor pumps" pages 49-51 passage "Force balance seals"**

(73) Titulaire: **JEUMONT-SCHNEIDER Société anonyme dite:, 31-32, Quai de Dion Bouton, F-92811 Puteaux Cedex (FR)**

(72) Inventeur: **Delloye, Nicolas, 8, rue Ambroise Thomas prolongée, F-59460 Jeumont (FR)**

(74) Mandataire: **Lejet, Christian, Société JEUMONT-SCHNEIDER 31-32, Quai de Dion Bouton, F-92811 Puteaux Cedex (FR)**

# Description

La présente invention concerne les surrégénérateurs de type piscine, c'est à dire, dont le noyau nucléaire est refroidi au sodium liquide incluant une pompe primaire notamment au sodium liquide s'emboîtant dans un conduit de refoulement, et couramment utilisés dans certains réacteurs nucléaires. On sait que lors de leur mise en place dans le réacteur les pompes primaires des surrégénérateurs de type piscine sont de préférence emboîtées dans les conduits de refoulement par l'intermédiaire d'éléments de liaison qui doivent assurer une bonne étanchéité entre la zone de la pompe où règne une haute pression, c'est-à-dire, la zone de refoulement et la zone de la pompe où règne une basse pression, c'est-à-dire, la zone d'aspiration, tout en autorisant un certain degré de liberté pour permettre des déplacements relatifs entre la pompe et le conduit, dûs notamment aux différences de température entre les différentes parties et à des effets mécaniques.

Dans les surrégénérateurs de faible puissance, cet élément de liaison est constitué par un manchon cylindrique à double articulation, dont le rapport longueur-diamètre permet d'accorder une liberté de mouvement relatif horizontal très limitée. Dans les surrégénérateurs de plus grande puissance (1 200 MW), il n'est pas possible d'utiliser un tel manchon dont la longueur est alors inacceptable. De ce fait, dans ce cas, la pompe est suspendue sur la dalle de fermeture du réacteur par un moyen élastique et s'emboîte dans le conduit. Toutefois, une telle solution n'apporte pas un degré suffisant de liberté dans la conception de la pompe.

L'invention a pour but d'obvier à cet inconvénient et elle est relative à un réacteur nucléaire surrégénérateur à neutrons rapides refroidi au sodium liquide comportant un élément de liaison disposé entre une pompe primaire au sodium liquide et un conduit de refoulement, l'élément de liaison autorisant des déplacements verticaux relatifs entre pompe et conduit, tout en assurant une étanchéité suffisante entre les zones de basse pression et les zones de haute pression de la pompe, et étant constitué par un manchon cylindrique de même axe au repos que le conduit de refoulement de la pompe et dont le diamètre interne est légèrement supérieur au diamètre externe d'un guide cylindrique solidaire de la pompe de telle manière que cette dernière puisse s'emboîter dans le manchon, et par une embase annulaire horizontale solidaire du manchon. Un tel réacteur nucléaire est décrit dans le FR-A-2 326 011.

Selon l'invention, un joint d'étanchéité est prévu entre le manchon et le guide, et l'embase repose sur une couronne annulaire prévue à cet effet sur la bride supérieure du conduit et est libre par rapport à la couronne, de telle façon que l'élément de liaison autorise des déplacements horizontaux relatifs entre pompe et conduit, des alvéoles étant ménagés dans la face inférieure de l'embase, de manière à constituer une butée hydrostatique alimentée par le fluide de refoulement de la pompe par l'intermédiaire de gicleurs et de conduits reliant les alvéoles à la zone où règne une haute pression dans la pompe, le fluide étant évacué dans la partie où règne une basse pression dans la pompe par l'intermédiaire de conduits prévus à cet effet et un joint d'étanchéité étant disposé entre l'embase et la couronne pour assurer une étanchéité suffisante entre la zone où règne une haute pression et les conduits d'évacuation du fluide utilisé dans le palier hydrostatique; une butée est solidaire du guide et un jeu existe entre la butée et le manchon de telle façon que l'élément de liaison autorise des déplacements angulaires relatifs de faible amplitude entre pompe et conduit.

L'invention sera mieux comprise et d'autres buts, avantages et caractéristiques de celle-ci apparaitront plus clairement à la lecture de la description qui suit d'un mode de réalisation donné à titre non limitatif et à laquelle une planche de dessin est annexée.

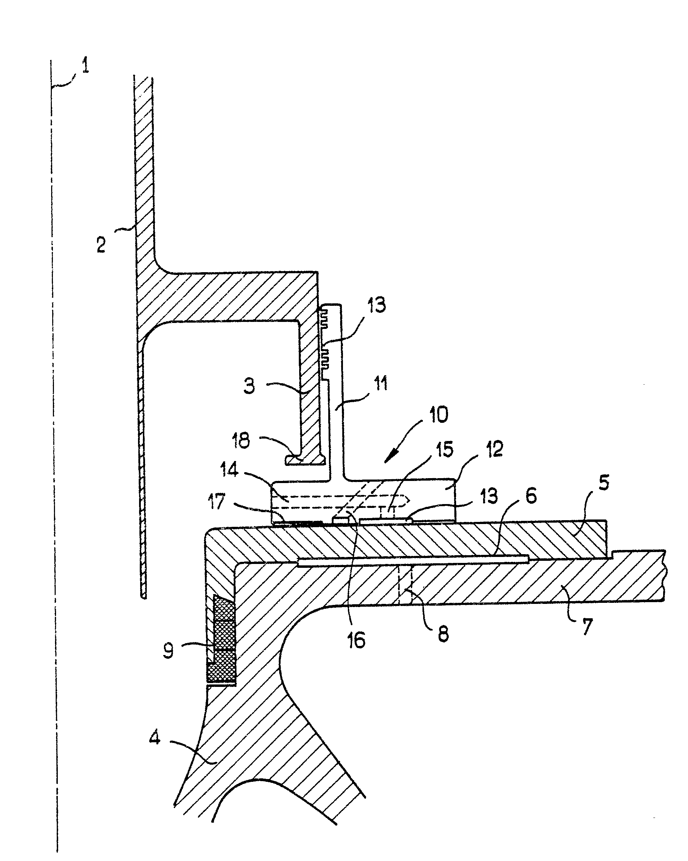

La figure unique représente, en demi-coupe axiale, l'élément de liaison entre la pompe et le conduit de refoulement conformément à la présente invention. En référence maintenant à cette figure, l'axe 1 de la pompe est représenté en traits mixtes. La paroi interne 2 de la pompe détermine sa section de refoulement. Dans le cas des surrégénérateurs, le fluide est généralement constitué par du sodium liquide. Un guide cylindrique 3 est solidaire de la pompe qui est suspendue par un moyen quelconque non représenté. Ce volume constitue donc une zone de haute pression. Le conduit de refoulement 4 est pourvu d'une couronne annulaire 5 disposée sur la bride supérieure du conduit. Dans l'exemple représenté, la couronne annulaire est disposée de manière à permettre certains mouvements relatifs dûs à la différence des températures locales entre les diverses parties du conduit de refoulement. Dans ce but, une chambre annulaire 6 est ménagée entre la couronne annulaire 5 et la bride supérieure 7 et un canal 8 met cette chambre 6 en communication avec une zone où règne une basse pression de manière à éliminer par homogénéisation, les trop forts gradients de température. Un joint 9 assure une étanchéité suffisante entre la partie où règne la haute pression et la chambre 6. L'élément de liaison 10 est constitué par un manchon cylindrique 11 solidaire d'une embase annulaire horizontale 12. Manchon 11 et embase 12 ont le même axe 1 que la pompe.

Le diamètre interne du manchon 11 est légèrement supérieur au diamètre externe du guide 3 de telle manière que la pompe puisse s'emboîter dans l'élément de liaison 10. Un joint 13 est prévu à la partie supérieure du manchon 11 de manière à assurer une étanchéité suffisante entre la zone où règne la haute pression et celle où règne la basse pression.

Dans l'exemple représenté, ce joint 13 est du type à labyrinthes circulaires. Mais tout autre type de joint peut-être utilisé.

Le manchon 11 permet d'autoriser les mouvements horizontaux et verticaux relatifs entre la pompe et le conduit ainsi que des déplacements angulaires de faible amplitude.

L'embase 12 est réalisée de manière à constituer une butée hydrostatique. En effet, l'élément de liaison 10 est principalement sollicité mécaniquement par des forces verticales dues à sa masse et à la pression et il est nécessaire d'éviter tout frottement critique entre cet élément et la couronne 5 lors de mouvements relatifs horizontaux entre la pompe et le conduit.

De ce fait, des alvéoles sont ménagés sur la face inférieure de l'embase 12 et sont alimentés en fluide sous-pression, prélevé dans le conduit de refoulement de la pompe, au moyen de conduits 14 et de gicleurs 15. Ces fuites alvéolaires sont collectées dans des conduits 16 de mise à basse pression reliés à la colonne d'aspiration de la pompe. Un joint 17, par exemple du type labyrinthe circulaire plan, assure une étanchéité suffisante entre la zone de refoulement de la pompe et ces conduits 16.

Comme on peut le constater, l'élément de liaison conforme à l'invention est supporté, lors du fonctionnement de la pompe, par un film hydrostatique de fluide permettant de supprimer tout frottement inopportun. En outre, il autorise des déplacements relatifs assez importants, tant horizontaux que verticaux avec une pompe encastrée sur la dalle de fermeture du réacteur. Le déplacement vertical est cependant limité par une butée 18 solidaire du guide 3, tandis que de déplacement angulaire est limité par le jeu existant entre le corps du manchon 11 et cette butée 18.

De même, le déplacement horizontal est limité par l'élément de la paroi interne de la pompe et par la géométrie de la couronne annulaire (5).

Enfin, cet élément de liaison rend extrêmement aisé le montage de la pompe sur le conduit de refoulement. Bien que seul un mode de réalisation de l'invention ait été décrit, il est évident que toute modification apportée par l'homme de l'art dans le même esprit ne sortirait pas du cadre de la présente invention.

## Revendication

1. Réacteur nucléaire surrégénérateur à neutrons rapides refroidi au sodium liquide comportant un élément de liaison disposé entre une pompe primaire au sodium liquide et un conduit de refoulement(4), ledit élément de liaison autorisant des déplacements verticaux relatifs entre pompe et conduit, tout en assurant une étanchéité suffisante entre les zones de basse pression et les zones de haute pression de la pompe, et étant constitué par un manchon cylindrique (11) de même axe (1) au repos que le conduit de refoulement de ladite pompe et dont le diamètre interne est légèrement supérieur au diamètre externe d'un guide cylindrique (3) solidaire de la pompe de telle manière que cette dernière puisse s'emboîter dans ledit manchon (11), et par une embase (12) annulaire horizontale solidaire dudit manchon (11), caractérisé en ce qu'un joint (13) d'étanchéité est prévu entre ledit manchon (11) et ledit guide (3), et en ce que ladite embase (12) repose sur une couronne annulaire (5) prévue à cet effet sur la bride supérieure (7) dudit conduit (4), et est libre par rapport à ladite couronne (5), de telle façon que ledit élément de liaison autorise des déplacement horizontaux relatifs entre pompe et conduit, des alvéoles (13) étant ménagés dans la face inférieure de ladite embase (12) de manière à constituer une butée hydrostatique alimentée par le fluide de refoulement de ladite pompe par l'intermédiaire de gicleurs (15) et de conduits (14) reliant lesdits alvéoles (13) à la zone où règne une haute pression dans la pompe, ledit fluide étant évacué dans la partie où règne une basse pression dans la pompe par l'intermédiaire de conduits (16) prévus à cet effet et un joint d'étanchéité (17) étant disposé entre ladite embase (12) et ladite couronne (5) pour assurer une étanchéité suffisante entre la zone où règne une haute pression et les conduits (16) d'évacuation du fluide utilisé dans ledit palier hydrostatique, et en ce qu'une butée (18) est solidaire dudit guide (3) et qu'un jeu existe entre ladite butée (18) et le manchon (11) de telle façon que ledit élément de liaison autorise des déplacements angulaires relatifs de faible amplitude entre pompe et conduit.

## Patentanspruch

Kernreaktor vom Typ des mit schnellen Neutronen arbeitenden Brüters und mit Kühlung durch flüssiges Natrium, versehen mit einem Verbindungselement, das zwischen einer Primärpumpe zum Befördern flüssigen Natriums und einer Ausstossleitung (4) angeordnet ist, wobei dieses Verbindungselement senkrechte Relativbewegungen zwischen Pumpe und Leitung zulässt, dabei aber eine ausreichende Dichtigkeit zwischen den Niederdruckzonen und den Hochdruckzonen der Pumpe gewährleistet, und gebildet aus einer zylindrischen Hülse (11), die im Ruhezustand dieselbe Achse (1) wie die Ausstossleitung der Pumpe aufweist und deren Innendurchmesser etwas grösser als der Aussendurchmesser einer zylindrischen Führung (3) ist, welche mit der Pumpe fest verbunden ist, so dass diese in die genannte Hülse (11) eingeschoben werden kann, sowie aus einem ringförmigen, waagerechten Fussteil (12), das fest mit der Hülse (11) verbunden ist, dadurch gekennzeichnet, dass eine Dichtung (13) zwischen der Hülse (11) und der Führung (3) vorgesehen ist, und dass das genannte Fussteil (12) auf einem ringförmigen Kranz (5) ruht, der zu diesem Zweck an dem oberen Flansch (7) der genannten Leitung (4) vorgesehen ist, und in bezug auf den genannten Kreis (4) frei ist, so dass das genannte Verbindungselement waagerechte Relativbewegungen zwischen Pumpe und Leitung zulässt, wobei Hohlzellen (13) der Unterseite des genannten Fussteils (12) derart angebracht sind, dass sie ein hydrostatisches Widerlager bilden, welches durch das von der Pumpe ausgestossene fluide Medium über Düsen (15) und Leitungen (14) gespeist wird, welche die genannten Hohlzellen (13) mit der Zone verbinden, wo in der Pumpe ein hoher Druck herrscht, wobei dieses fluide Medium in denjenigen Teil, wo ein niedriger Druck in der Pumpe herrscht, über zu diesem Zweck vorgesehene Leitungen (16) abgeführt wird, und wobei eine Dichtung (17) zwischen dem genannten Fussteil (12) und dem genannten Kranz (5) vorgesehen ist, um eine ausreichende Dichtheit zwischen der Hochdruckzone und den Abführleitungen (16) für das fluide Medium, welches in dem hydrostatischen Lager verwendet wird, zu gewährleisten, und dass ein Anschlag (18) fest mit der Führung (3) verbunden ist und ein Spiel zwischen diesem Anschlag (18) und der Hülse (11) vorhanden ist, so dass das Verbindungselement relative Winkelbewegungen von geringer Grösse zwischen der Pumpe und der Leitung zulässt.

## Claim

1. Fast breeder nuclear reactor cooled with liquid sodium, comprising a connecting element situated between a primary pump for the liquid sodium and a delivery pipe (4), the said connecting element allowing relative vertical displacement between pump and conduit whilst assuring sufficient sealing-tightness between the low pressure zones and the high pressure zones of the pump, and being constituted by a cylindrical sleeve (11) having the same axis (1) in the condition of rest as the delivery conduit of the said pump, and with the inner diameter slightly greater than the outer diameter of a cylindrical guide (3) integral with the pump in such a manner that the latter can fit into the said sleeve (11), and by a horizontal annular base (12) integral with the said sleeve (11), characterised in that a sealing element (13) is provided between the said sleeve (11) and the said guide (3), and in that the said base (12) rests on an annular ring (5) provided for this purpose on the upper flange (7) of the said pipe (4), and is free relatively to the said ring (5), in such a manner that the said connecting element allows relative horizontal displacement between pump and pipe, recesses (13) being formed in the lower face of the said base (12) in such a way as to constitute a hydrostatic thrust bearing supplied by the delivery fluid of the said pump by way of nozzles (15) and ducts (14) connecting the said recesses (13) to the zone where a high pressure prevails in the pump, the said fluid being removed to the portion where a low pressure prevails in the pump by way of ducts (16) provided for this purpose and a sealing element (17) being arranged between the said base (12) and the said ring (5) to ensure sufficient sealing-tightness between the zone where a high pressure prevails and the fluid discharge ducts (16) for the fluid used in the said hydrostatic bearing, and in that an abutment (18) is integral with the said guide (3) and that a clearance exists between the said abutment (18) and the sleeve (11) in such a manner that the said connecting element allows relative angular displacement of small amplitude between pump and pipe.